# EUROPÄISCHE PATENTSCHRIFT

(11) **EP 2 069 435 B1**
(45) Veröffentlichungstag und Bekanntmachung des Hinweises auf die Patenterteilung: **04.04.2012**
(21) Anmeldenummer: 07802857.8
(22) Anmeldetag: 24.08.2007
(51) Int. Cl.: D06P 1/16, D06P 5/30, C09B 67/22

(54) **BLAUE ANTHRACHINONFARBSTOFFE, DEREN HERSTELLUNG UND VERWENDUNG**
BLUE ANTHRAQUINONE DYES, PRODUCTION AND USE THEREOF
COLORANTS D'ANTHRAQUINONE BLEUS, LEUR PRODUCTION ET LEUR UTILISATION

(30) Priorität: 31.08.2006 DE 102006040801
(43) Veröffentlichungstag der Anmeldung: 17.06.2009
(73) Patentinhaber: DyStar Colours Distribution GmbH, 65926 Frankfurt am Main (DE)
(72) Erfinder: JORDAN, Hartwig, 51467 Bergisch Gladbach (DE); ENDRES, Andreas, 51371 Leverkusen (DE)
(86) Internationale Anmeldenummer: PCT/EP2007/058808
(87) Internationale Veröffentlichungsnummer: WO 2008/025733

(56) Entgegenhaltungen:
- EP-A- 0 735 110
- WO-A-2005/071016
- DE-A1- 1 619 646
- DE-A1- 1 955 071
- DE-A1- 3 208 326
- JP-A- 48 103 875
- JP-A- 49 001 631
- US-A1- 2004 226 112

## Beschreibung

Zum Färben von Polyesterfasern für den Einsatz für Automobilbezugsstoffe in blauen Tönen werden in der Regel Anthrachinonfarbstoffe verwendet, die in großer Zahl beschrieben sind.

So sind auch bereits halogenierte Anthrachinonfarbstoffe beispielsweise aus DE 1955071, DE 1963357, DE 2021521, DE 2318783 DE 3 208 326, DE 1 619 646 und DE 3035277 bekannt.

Im Anthrachinonkern chlorierte und bromierte Verbindungen sind außerdem in JP 40-22953 beschrieben. Die dort aufgeführten Beispiele weisen jedoch Mängel hinsichtlich Heißlichtechtheit und teilweise auch hinsichtlich Aufbauvermögen auf.

In der JP 48-103875 EP 0 735 110, WO 2005 071016 und der JP 47-38928 sind Mischungen von Nitro- mit Aminosubstituierten Farbstoffen dieses Typs beschrieben, die einen mehrfach halogenierten Phenylaminoring tragen. Zwar wird das gute Aufziehvermögen dieser Mischungen auf synthetische Fasern hervorgehoben, allerdings ist die Heißlichtechtheit nicht ausreichend.

Ferner sind aus der JP 51-27673 Farbstoffe des oben beschriebenen Typs bekannt, in denen der Phenylaminoring in para-Stellung eine Hydroxyethylgruppe enthält. Diese Farbstoffe sind jedoch ebenfalls hinsichtlich Heißlichtechtheit und Ziehvermögen verbesserungswürdig.

Farbstoffe zum Färben bzw. Bedrucken von Automobilbezugsstoffen müssen hohe Anforderungen an die Lichtechtheit, insbesondere an die Heißlichtechtheit, insbesondere auch als Bestandteil von Trichromien, das heißt in Kombinationen von blauen, gelben und roten Dispersionsfarbstoffen erfüllen. Hier kommt es darauf an, dass die Einzelkomponenten der Trichromie in gleichem Maße ausbleichen, damit es nicht zu Tonveränderungen unter Einwirkung von Licht kommt. Auch diesbezüglich besteht Bedarf an verbesserten blauen Farbstoffen.

Aufgabe der vorliegenden Erfindung ist es somit, blaue Dispersionsfarbstoffe bereitzustellen, die die oben beschriebenen Nachteile nicht aufweisen und die insbesondere den vorhandenen Farbstoffen bezüglich Heißlichtechtheit, insbesondere in Kombination mit gelben und roten Farbstoffen in einer Trichromie, überlegen sind.

Überraschend wurde gefunden, dass diese Aufgabe durch die nachstehend definierten Farbstoffe gelöst wird.

Die vorliegende Erfindung betrifft somit Farbstoffe der allgemeinen Formel I 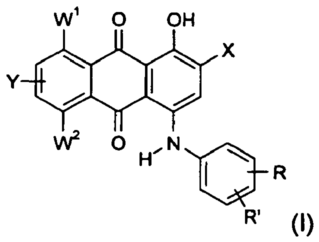 worin
- X und Y: für Wasserstoff, Brom oder Chlor, aber nicht gleichzeitig für Wasserstoff;
- R: für F, COOR¹ oder CF₃;
- R': für H oder F;
- R¹: für C₁-C₆-Alkyl; stehen und
einer der Reste W¹ und W² Hydroxy und der andere Nitro bedeuten und Y immer ortho zur Hydroxygruppe steht.

Für R¹ stehendes C₁-C₆-Alkyl kann geradkettig oder verzweigt sein und bedeutet beispielsweise Methyl, Ethyl, n-Propyl, i-Propyl, n-Butyl, i-Butyl, sek.-Butyl, tert.-Butyl, n-Pentyl und n-Hexyl. Bevorzugt steht R¹ jedoch für Methyl oder Ethyl.

Wenn R' für F steht, so steht R bevorzugt ebenfalls für F.

Bevorzugte Verbindungen der allgemeinen Formel (I) haben die allgemeinen Formeln (I') 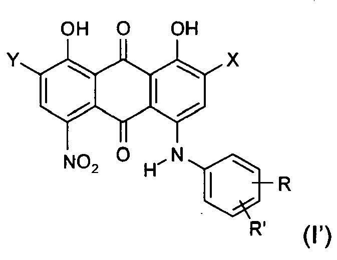 oder (I") 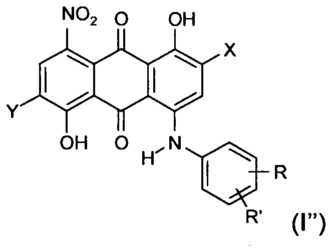 wobei X, Y, R und R' wie oben angegeben definiert sind.

Die erfindungsgemäßen Farbstoffe der allgemeinen Formel I können mit Vorteil zusammen mit einem oder mehreren anderen Farbstoffen, wie sie üblicherweise zum Färben von Polyesterfasern oder Polyestertextilmaterialien für Automobilbezugsstoffe verwendet werden, eingesetzt werden.

Vorliegende Erfindung betrifft somit auch Farbstoffmischungen, die mindestens einen Farbstoff der allgemeinen Formel I und mindestens einen weiteren Farbstoff, der zum Färben von Polyestertextilmaterialien für Automobilbezugsstoffe verwendet werden kann, enthalten.

Farbstoffe, die zum Färben von Polyestertextilmaterialien für Automobilbezugsstoffe verwendet werden können, sind insbesondere Azo-, Disazo-, Anthrachinon-, Nitro- und Naphthalimid-Farbstoffe, die dem Fachmann an sich bekannt sind.

Bevorzugte gelbe bzw. orangefarbene Farbstoffe dieser Art sind beispielsweise die im Colour Index gelisteten Farbstoffe C.I. Dispers Gelb 23, 42, 51, 59, 65, 71, 86, 108, 122, 163, 182 und 211, C.I. Solvent Yellow 163, C.I. Dispers Orange 29, 30, 32, 41, 44, 45, 61 und 73, C.I. Pigment Orange 70, C.I. Solvent Braun 53, sowie der Farbstoff der Formel II 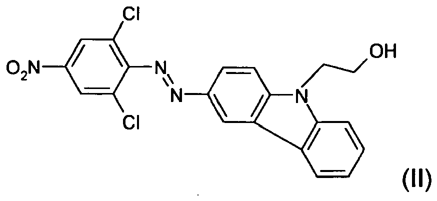 und Farbstoffe der allgemeinen Formel (III) 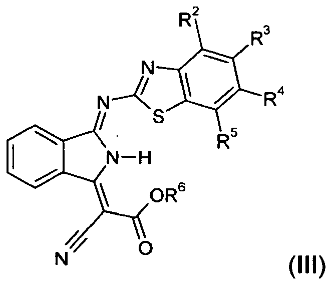 worin
- R² bis R⁵: unabhängig voneinander für Wasserstoff, Chlor, Methyl, Ethyl, iso-Propyl, tert.-Butyl, Cyclohexyl, Methoxy, Ethoxy, n-Propoxy, n-Butoxy, Methoxy-ethyl, Ethoxy-ethyl, Butoxy-ethyl oder Phenoxy; und
- R⁶: für Methyl, Ethyl, Propyl, iso-Propyl, Allyl, n-Butyl, iso-Butyl, n- und iso-Pentyl, Hexyl, Octyl, 2-Ethyl-hexyl, Methoxy-ethyl, Ethoxy-ethyl, Butoxy-ethyl oder Butoxy-ethoxy-ethyl;
stehen.

Bevorzugte rote Farbstoffe dieser Art sind beispielsweise die im Colour Index gelisteten Farbstoffe C.I. Dispers Rot 60, 82, 86, 91, 92, 127, 134, 138, 159, 167, 191, 202, 258, 279, 284, 302 und 323, C.I. Solvent Red 176, sowie die Farbstoffe der allgemeinen Formeln IV, V und VI 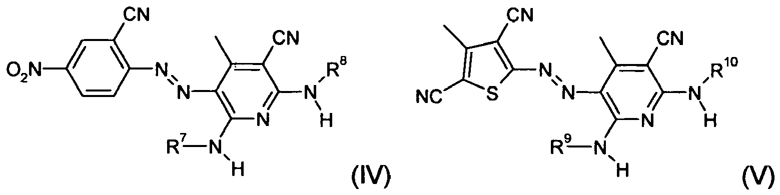 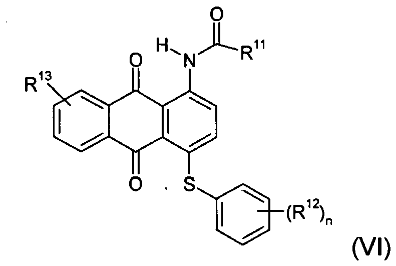 worin
- R⁷ und R⁸: unabhängig voneinander für Hydroxyethoxyethyl oder Phenyl;
- R⁹ und R¹⁰: unabhängig voneinander für Wasserstoff, Hydroxyethoxyethyl, Hydroxybutoxypropyl, Acetoxyethoxyethyl oder Acetoxybutoxypropyl;
- R¹¹: für (C₁-C₈)-Alkyl, Phenyl oder Phenyl, das durch (C₁-C₄)-Alkyl, Hydroxy oder Halogen substituiert ist;
- R¹² und R¹³: unabhängig voneinander für Wasserstoff oder Halogen; und
- n: für 0, 1 oder 2;
stehen.

Bevorzugte blaue bzw. violette Farbstoffe dieser Art sind beispielsweise die im Colour Index gelisteten Farbstoffe C.I. Dispers Blau 27, 54, 56, 60, 73, 77, 79, 79:1, 87, 266, 333 und 361, C.1. Dispers Violett 27, 28, 57 und 95 sowie die Farbstoffe der Formel VII 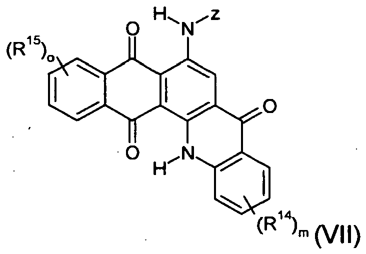 worin
- R¹⁴ und R¹⁵: unabhängig voneinander für (C₁-C₈)-Alkyl, Halogen oder Hydroxy;
- Z: für -CO(CH₂)₃Cl, gegebenenfalls durch (C₁-C₈)-Alkyl, Halogen oder Hydroxy substituiertes -COPhenyl oder -SO₂R¹⁶;
- R¹⁶: für (C₁-C₈)-Alkyl, Phenyl oder Phenyl, das durch (C₁-C₄)-Alkyl, Hydroxy oder Halogen substituiert ist; und
- m und o: unabhängig voneinander für 0, 1 oder 2;
stehen.

Bevorzugte erfindungsgemäße Farbstoffmischungen enthalten mindestens einen Farbstoff der allgemeinen Formel (I) und mindestens einen gelben bzw. orangefarbenen oder roten oder blauen Farbstoff.

Weitere bevorzugte erfindungsgemäße Farbstoffmischungen enthalten mindestens einen Farbstoff der allgemeinen Formel (I) und mindestens einen gelben bzw. orangefarbenen und mindestens einen roten Farbstoff.

Weitere bevorzugte erfindungsgemäße Farbstoffmischungen enthalten mindestens einen Farbstoff der allgemeinen Formel (I) und mindestens einen weiteren blauen Farbstoff, sowie mindestens einen gelben bzw. orangefarbenen und/oder mindestens einen roten Farbstoff.

In den erfindungsgemäßen Farbstoffmischungen hängen die Anteile an Farbstoff(en) der allgemeinen Formel I und weiteren Farbstoff(en), der (die) zum Färben von Polyestertextilmaterialien für Automobilbezugsstoffe verwendet werden kann (können), allein von dem zu erzielenden Farbton ab und können somit in weiten Grenzen variieren. In der Regel sind Farbstoff(e) der allgemeinen Formel I in Mengen von 1 bis 99 Gew.-% und Farbstoff(e), der (die) zum Färben von Polyestertextilmaterialien für Automobilbezugsstoffe verwendet werden kann (können), in Mengen von 99 bis 1 Gew.-% enthalten.

Die erfindungsgemäßen Farbstoffe der allgemeinen Formel (I) können dadurch hergestellt werden, dass eine Verbindung der allgemeinen Formel (VIII) 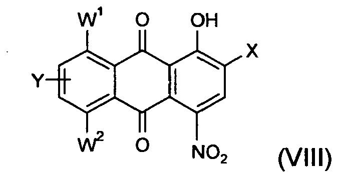 worin X, Y, W¹ und W² wie oben angegeben definiert sind, mit einer Verbindung der allgemeinen Formel (IX) 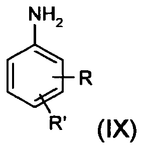 worin R und R' wie oben angegeben definiert sind, umgesetzt wird.

Diese Umsetzung erfolgt bevorzugt in organischen Lösungsmitteln, wiebeispielsweise Methylglycol oder Nitrobenzol bei erhöhten Temperaturen, vorzugsweise bei 120 - 200 °C.

Verbindungen der allgemeinen Formel (VIII), in denen X und/oder Y für Brom stehen, können durch Umsetzung einer Verbindung der allgemeinen Formel (X) 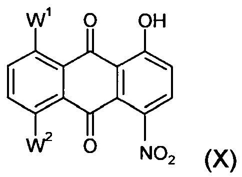 worin W¹ und W² wie oben angegeben definiert sind, mit einem Bromierungsmittel erhalten werden.

Als Bromierungsmittel können beispielsweise elementares Brom oder Natriumbromid und Wasserstoffperoxid verwendet werden.

Als Lösungsmittel für diese Umsetzungen kommen beispielsweise Natronlauge, Schwefelsäure, Pyridin oder Wasser, das Emulgatoren enthält, in Betracht. Je nach eingesetzter Menge Bromierungsmittel erhält man völlig durchbromierte Verbindungen der allgemeinen Formel (VIII), d.h. X = Y = Brom oder deren Gemische mit monobromierten Verbindungen der allgemeinen Formel (VIII), d.h. X = Brom und Y = Wasserstoff bzw. X = Wasserstoff und Y = Brom. Gegebenenfalls kann auch noch unumgesetzte Verbindung der allgemeinen Formel (X) enthalten sein.

Der Bromierungsgrad kann also in weiten Grenzen variieren, wobei ein Bromierungsgrad von 0,5 bis 1,5 Bromatomen pro Molekül besonders bevorzugt ist. Verbindungen der allgemeinen Formel (VIII), in denen X und/oder Y für Chlor stehen, können durch Umsetzung einer Verbindung der allgemeinen Formel (X) mit einem Chlorierungsmittel, insbesondere elementarem Chlor, erhalten werden. Bei dieser Umsetzung erfolgt jedoch neben der Einführung von ein bis zwei Chloratomen in das Molekül die Reduktion eine Nitrogruppe zu einer Nitrosogruppe. Letztere muss in einem zusätzlichen Syntheseschritt wieder zur Nitrogruppe reoxidiert werden. Dabei kommen die üblichen Oxidationsmittel zur Verwendung, vorteilhafterweise Wasserstoffperoxid und katalytische Mengen von Tris(cetylpyridinium)-peroxowolframatophosphat, wie in der Literatur (S. Sakaue, T. Tsubakino, Y. Nishiyama, Y. Ishii, J. Org. Chem. 1993, 58, 3633-3638) beschrieben. Auch bei der Chlorierung der Verbindung der allgemeinen Formel (X) können je nach Reaktionsführung Produkte mit unterschiedlichem Chlorierungsgrad erhalten werden. Ein Chlorierungsgrad von 0,5 bis 1,5 Chloratomen pro Molekül ist besonders bevorzugt.

Die erfindungsgemäßen Farbstoffmischungen können dadurch hergestellt werden, dass die Einzelkomponenten in den gewünschten Mischungsverhältnissen mechanisch gemischt werden.

Die erfindungsgemäßen Farbstoffe und Farbstoffmischungen eignen sich in hervorragender Weise zum Färben und Bedrucken von hydrophoben synthetischen Materialien, wobei die erhaltenen Färbungen und Drucke eine außergewöhnlich hohe Lichtechtheit und Heißlichtechtheit aufweisen, sodass die so gefärbten Textilien für die Innenräume von Automobilen genutzt werden können.

Die vorliegende Erfindung betrifft somit auch die Verwendung der erfindungsgemäßen Farbstoffe und Farbstoffmischungen zum Färben und Bedrucken von hydrophoben Materialien bzw. Verfahren zum Färben oder Bedrucken solcher Materialien in an und für sich üblichen Verfahrensweisen, bei welchen man einen oder mehrere erfindungsgemäße Farbstoffe bzw. eine erfindungsgemäße Farbstoffmischung als Farbmittel einsetzt.

Die genannten hydrophoben Materialien können synthethischen oder halbsynthetischen Ursprungs sein. Es kommen beispielsweise Cellulose-2½-acetat, Cellulosetriacetat, Polyamide und insbesondere hochmolekulare Polyester in Betracht. Materialien aus hochmolekularem Polyester sind insbesondere solche auf Basis von Polyethylenglykolterephthalaten.

Die hydrophoben synthetischen Materialien können in Form von flächen- oder fadenförmigen Gebilden vorliegen und beispielsweise zu Garnen oder gewebten, gewirkten oder gestrickten Textilstoffen verarbeitet sein. Bevorzugt sind faserförmige Textilmaterialien, die beispielsweise auch in Form von Mikrofasern vorliegen können.

Ganz besonders eignen sich die erfindungsgemäßen Farbstoffe und Farbstoffmischungen zum Färben und Bedrucken von Polyesterfasern und Polyestertextilmaterialien für Automobilbezugsstoffe. Dabei ist es bevorzugt, das Färben und Bedrucken in Gegenwart von UV-Absorbern, beispielsweise solchen auf Basis von Benzophenon, Phenyltriazol oder Benztriazol, durchzuführen. Einzelheiten zum Färben und Bedrucken von Automobilbezugsstoffen sind dem Fachmann bekannt und in der einschlägigen Literatur beschrieben.

Darüber hinaus können mit den erfindungsgemäßen Farbstoffen und Farbstoffmischungen aber auch für andere Einsatzzwecke vorgesehene hydrophobe synthetische Materialien mit Vorteil gefärbt und bedruckt werden, so etwa alkalisierte Polyesterfasern, Polyester-Mikrofasern oder Materialien, die nicht in Faserform vorliegen.

Das Färben gemäß erfindungsgemäßer Verwendung kann in an sich bekannter Weise erfolgen, vorzugsweise aus wässriger Dispersion, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 180 bis 230°C fixiert wird.

Das Bedrucken der genannten Materialien kann in an sich bekannter Weise so durchgeführt werden, dass die erfindungsgemäßen Farbstoffe bzw. Farbstoffmischungen einer Druckpaste einverleibt werden und die damit bedruckte Ware zur Fixierung des Farbstoffes, gegebenenfalls in Gegenwart eines Carriers, bei Temperaturen zwischen 180 bis 230°C mit HT-Dampf, Druckdampf oder Trockenhitze behandelt wird.

Die erfindungsgemäßen Farbstoffe und Farbstoffmischungen sollen bei ihrer Anwendung in Färbeflotten, Klotzflotten oder Druckpasten in möglichst feiner Verteilung vorliegen.

Die Feinverteilung der Farbstoffe erfolgt in an sich bekannter Weise dadurch, dass man den in der Fabrikation anfallenden Farbstoff zusammen mit Dispergiermitteln in einem flüssigen Medium, vorzugsweise in Wasser, aufschlämmt und die Mischung der Einwirkung von Scherkräften aussetzt, wobei die ursprünglich vorhandenen Farbstoffteilchen mechanisch so weit zerkleinert werden, dass eine optimale spezifische Oberfläche erreicht wird und die Sedimentation des Farbstoffes möglichst gering ist. Dies geschieht in geeigneten Mühlen, wie Kugel- oder Sandmühlen. Die Teilchengröße der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind beispielsweise Umsetzungsprodukte von Alkylenoxiden, wie zum Beispiel Ethylen- oder Propylenoxid mit alkylierbaren Verbindungen, wie zum Beispiel Fettalkoholen, Fettaminen, Fettsäuren, Phenolen, Alkylphenolen und Carbonsäureamiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für bestimmte Anwendungen gießbar sein. Der Farbstoff- und Dispergiermittelgehalt ist daher in diesen Fällen limitiert. Im allgemeinen werden die Dispersionen auf einen Farbstoffgehalt von bis zu 50 Gewichtsprozent und einen Dispergiermittelgehalt von bis zu etwa 25 Gewichtsprozent eingestellt. Aus ökonomischen Gründen werden Farbstoff-gehalte von 15 Gewichtsprozent meist nicht unterschritten.

Die Dispersionen können auch noch weitere Hilfsmittel enthalten, beispielsweise solche, die als Oxidationsmittel wirken, wie zum Beispiel Natrium-m-nitrobenzolsulfonat oder fungizide Mittel, wie zum Beispiel Natrium-o-phenyl-phenolat und Natriumpentachlorphenolat und insbesondere sogenannte "Säurespender", wie zum Beispiel Butyrolacton, Monochloracetamid, Natriumchloracetat, Natriumdichloracetat, das Na-Salz der 3-Chlorpropionsäure, Halbester der Schwefelsäure wie zum Beispiel Laurylsulfat, sowie Schwefelsäureester von oxethylierten und oxypropylierten Alkoholen, wie zum Beispiel Butylglykolsulfat.

Die so erhaltenen Farbstoffdispersionen können sehr vorteilhaft zum Ansatz von Färbeflotten und Druckpasten verwendet werden.

Für gewisse Anwendungsbereiche werden Pulvereinstellungen bevorzugt. Diese Pulver enthalten den Farbstoff, Dispergiermittel und andere Hilfsmittel, wie beispielsweise Netz-, Oxidations-, Konservierungs- und Entstaubungsmittel und die oben genannten "Säurespender".

Ein bevorzugtes Herstellungsverfahren für pulverförmige Farbstoffzubereitungen besteht darin, dass den oben beschriebenen flüssigen Farbstoffdispersionen die Flüssigkeit entzogen wird, zum Beispiel durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der oben beschriebenen Farbstoffeinstellungen mit dem Färbemedium, vorzugsweise mit Wasser, so weit verdünnt, dass sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt. Durch Zugabe von organischen und anorganischen Säuren wie Essigsäure, Bernsteinsäure, Borsäure oder Phosphorsäure wird ein pH-Wert von 4 bis 5, vorzugsweise 4,5, eingestellt. Es ist vorteilhaft, den eingestellten pH-Wert abzupuffern und eine ausreichende Menge eines Puffersystems zuzusetzen. Ein vorteilhaftes Puffersystem ist zum Beispiel das System Essigsäure/Natriumacetat.

Soll der Farbstoff oder die Farbstoffmischung im Textildruck verwendet werden, so werden die erforderlichen Mengen der oben genannten Farbstoffeinstellungen in an sich bekannter Weise zusammen mit Verdickungsmitteln, wie zum Beispiel Alkali-Alginaten oder dergleichen, und gegebenenfalls weiteren Zusätzen, wie zum Beispiel Fixierbeschleunigern, Netzmitteln und Oxidationsmitteln, zu Druckpasten verknetet.

Die vorliegende Erfindung betrifft auch Tinten für den digitalen Textildruck nach dem Ink-Jet Verfahren, die dadurch gekennzeichnet sind, dass sie einen erfindungsgemäßen Farbstoff bzw. eine erfindungsgemäße Farbstoffmischung enthalten.

Die erfindungsgemäßen Tinten sind bevorzugt wässrig und enthalten den erfindungsgemäßen Farbstoffe bzw. die erfindungsgemäße Farbstoffmischung, beispielsweise in Mengen von 0,1 bis 50 Gew.-%, bevorzugt in Mengen von 1 bis 30 Gew.-% und besonders bevorzugt in Mengen von 1 bis 15 Gew.-% bezogen auf das Gesamtgewicht der Tinte.

Daneben enthalten sie insbesondere von 0,1 bis 20 Gew.-% eines Dispergiermittels. Geeignete Dispergiermittel sind dem Fachmann bekannt, im Handel erhältlich und schließen beispielsweise sulfonierte oder sulfomethylierte Lignine, Kondensationsprodukte aus aromatischen Sulfonsäuren und Formaldehyd, Kondensationsprodukte aus gegebenenfalls substituiertem Phenol und Formaldehyd, Polyacrylate und entsprechende Copolymere, modifizierte Polyurethane und Umsetzungsprodukte von Alkylenoxiden mit alkylierbaren Verbindungen, wie beispielsweise Fettalkoholen, Fettaminen, Fettsäuren, Carbonsäureamiden und gegebenenfalls substituierten Phenolen ein.

Weiterhin können die erfindungsgemäßen Tinten die üblichen Zusatzstoffe enthalten, wie beispielsweise Viskositätsmoderatoren, um Viskositäten im Bereich von 1,5 bis 40,0 mPas in einem Temperaturbereich von 20 bis 50 °C einzustellen. Bevorzugte Tinten haben eine Viskosität von 1,5 bis 20 mPas und besonders bevorzugte Tinten haben eine Viskosität von 1,5 bis 15 mPas.

Als Viskositätsmoderatoren eignen sich rheologische Additive, wie beispielsweise Polyvinylcaprolactam, Polyvinylpyrrolidon sowie deren Co-Polymere, Polyetherpolyol, Assoziatiwerdicker, Polyharnstoff, Natriumalginate, modifizierte Galaktomannane, Polyetherharnstoff, Polyurethan und nichtionogene Celluloseether.

Als weitere Zusätze können die erfindungsgemäßen Tinten oberflächenaktive Substanzen zur Einstellung von Oberflächenspannungen von 20 bis 65 mN/m, die in Abhängigkeit von dem verwendeten Verfahren (Thermo- oder Piezotechnologie) gegebenenfalls angepasst werden.

Als oberflächenaktive Substanzen eignen sich beispielsweise Tenside aller Art, bevorzugt nichtionogene Tenside, Butyldiglykol und1,2 Hexandiol.

Weiterhin können die Tinten noch übliche Zusätze, wie beispielsweise Stoffe zur Hemmung des Pilz- und Bakterienwachstums in Mengen von 0,01 bis 1 Gew.-% bezogen auf das Gesamtgewicht der Tinte enthalten.

Die erfindungsgemäßen Tinten können in üblicher Weise durch Mischen der Komponenten in Wasser hergestellt werden.

Die Erfindung wird durch die folgenden Beispiele erläutert.

### Beispiel 1 (nicht erfindungsgemäß)

a) 46,4 Teile Dinitrochrysazin (1,8-Dihydroxy-4,5-dinitroanthrachinon) werden in 137 Teilen wasserfreiem Pyridin verrührt und auf -5°C abgekühlt. Bei dieser Temperatur wird eine Lösung von 22,6 Teilen Brom in 48,1 Teilen Pyridin (wasserfrei) zugetropft. Zur besseren Rührbarkeit gibt man weitere 68 Teile Pyridin (wasserfrei) zu. Man rührt 2,5 h bei -5°C nach und trägt das Reaktinsgemisch dann in 1760 Teile Wasser aus. Man säuert mit Salzsäure an, rührt 1 h nach und filtriert. Der Nutschkuchen wird mit Wasser neutral gewaschen und bei 40°C im Vakuum getrocknet.
Ausb.: 55,5 Teile eines Gemisches der Verbindungen (Xa), (VIIIa) und (Vlllb)

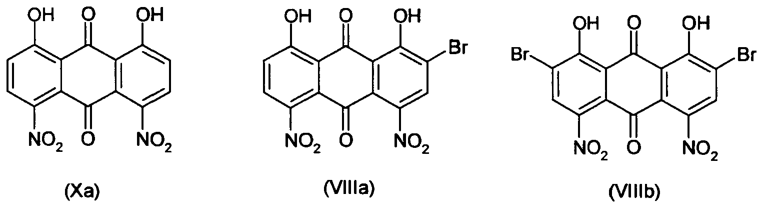

| | |
|---|---|
| Zusammensetzung nach HPLC: | 20% Verbindung der Formel (Xa) |
| | 51% Verbindung der Formel (VIIIa) |
| | 29% Verbindung der Formel (VIIIb) |

b) 4,1 Teile des gemäß a) erhaltenen Gemisches werden in 54 Teilen Nitrobenzol vorgelegt und 5,21 Teile p-Chloranilin eingetragen. Man rührt 7,5 h bei 150°C und lässt dann auf Raumtemperatur abkühlen. Das Reaktionsgemisch wird in 158 Teile Methanol ausgetragen und 30 min verrührt. Man saugt ab, wäscht mit Methanol und trocknet bei 40°C im Vakuum.
Ausbeute: 3,75 Teile eines blauen Farbstoffes (λₘₐₓ = 629 nm (DMF)), der die erfindungsgemäßen Verbindungen (Ia), (Ib) und (Ic) und darüberhinaus die aus der Verbindung der Formel (Xa) entstandene Verbindung (XIa) enthält.

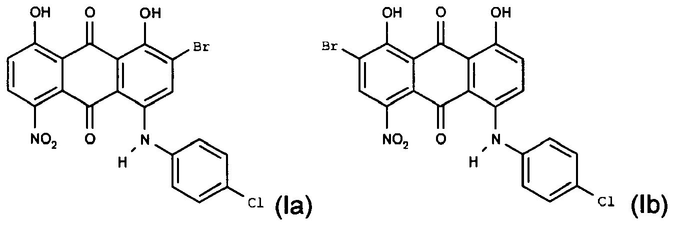

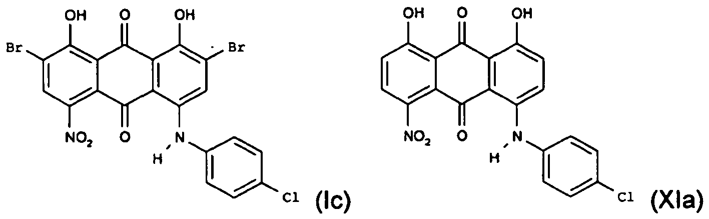

### Beispiele 2 bis 9

a) 33 Teile Dinitrochrysazin werden in 900 Teilen 0,89%iger Natronlauge verrührt. Bei Raumtemperatur werden 32 Teile Brom zugetropft. Dann wird auf 40-50°C erwärmt und 2 h bei dieser Temperatur gerührt. Danach werden weitere 9,6 Teile Brom zugetropft und 2 h bei 40-50°C nachgerührt. Man lässt auf Raumtemperatur abkühlen, filtriert und wäscht mit Wasser neutral. Nach Trocknen erhält man 46,3 Teile der Verbindung der Formel (VIIIb) (94,9% d.Th.).
b) Wird die gemäß a) erhaltene Verbindung der Formel (VIIIb) wie in Beispiel 1b) angegeben mit verschieden substituierten Anilinen umgesetzt, erhält man folgende erfindungsgemäße Verbindungen

| Beispiel¹⁾ | W¹ | W² | X | Y | R | λₘₐₓ in DMF [nm] |
|---|---|---|---|---|---|---|
| 2 (ne) | OH | NO₂ | Br | Br | m-Cl | 628 |
| 3 (ne) | OH | NO₂ | Br | Br | m-Br | 629 |
| 4 | OH | NO₂ | Br | Br | m-COOMe | 630 |
| 4a | OH | NO₂ | Br | Br | p-F | 630 |

| | | | | | | |
|---|---|---|---|---|---|---|
| ¹⁾ ne = nicht erfingdungsgemäß | | | | | | |

In analoger Weise können auch die nachfolgenden Verbindungen erhalten werden

| Beispiel¹⁾ | W¹ | W² | X | Y | R | λₘₐₓ in DMF [nm] |
|---|---|---|---|---|---|---|
| 5 (ne) | NO₂ | OH | Br | Br | m-Cl | 646 |
| 6 (ne) | NO₂ | OH | Br | Br | m-Br | 635 |
| 7 (ne) | NO₂ | OH | Br | Br | p-Cl | 636 |
| 8 (ne) | NO₂ | OH | Br | Br | p-Br | 636 |
| 9 (ne) | NO₂ | OH | Br | Br | o-Br | 609 |

| | | | | | | |
|---|---|---|---|---|---|---|
| ¹⁾ ne = nicht erfindungsgemäß | | | | | | |

### Beispiel 10 bis 12

a) 78,4 Teile Dinitroanthrarufin (1,5-Dihydroxy-4,8-dinitroanthrachinon) werden in ein Gemisch aus 1153 Teilen Schwefelsäure Monohydrat und 152 Teilen Oleum eingetragen. Dazu gibt man 1,4 Teile Iod. Es wird ca. 3 h lang Chlor bis zur Sättigung eingeleitet, wobei die Temperatur auf 28-30°C steigt. Man trägt auf 4400 Teile Eiswasser aus, rührt 30 Minuten und saugt ab. Es wird mit Wasser neutral gewaschen und im Vakuum getrocknet. Man erhält 77,9 Teile Rohprodukt, das die Verbindungen der Formeln (VIIIc), (XII), (XIII) und (XIV) umfasst

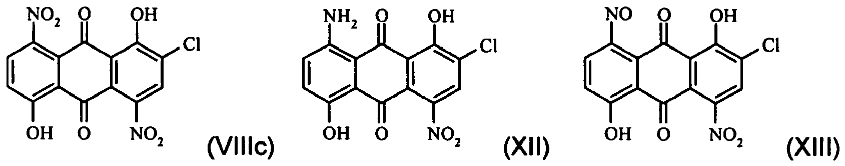

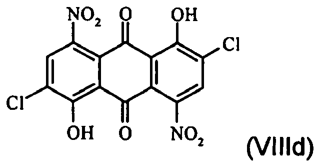

| | |
|---|---|
| Zusammensetzung: | 5% Verbindung der Formel (VIIIc) |
| | 15% Verbindung der Formel (XII) |
| | 55% Verbindung der Formel (XIII) |
| | 25% Verbindung der Formel (VIIId) |

Das Chloratom in den Verbindungen (XII) und (XIII) kann auch ortho zu der jeweils anderen Hydroxy-Gruppe gebunden sein.
Eine Reinigung kann erzielt werden, indem man in 630 Teilen Ethanol 3 h bei Rückfluss rührt, heiß absaugt und mit Ethanol wäscht. Nach Trocknen erhält man 64,2 Teile Produkt, was 77,6% d.Th. entspricht. Die Verbindung der Formel (XII) ist hierbei abgereichert worden.
b) 22,5 Teile des gemäß a) erhaltenen Gemisches wird in 124 Teilen tert-Butanol und 146 Teilen 35%igem Wasserstoffperoxid 2 h zum Rückfluss erhitzt. Dann gibt man 9 Teile Tris(cetylpyridinium)-peroxowolframatophosphat [π-C₅H₅N(CH₂)₁₅CH₃]₃-{PO₄[W(O)(O₂)₂]₄} dazu. Man rührt weitere 2 h bei Rückfluss, lässt auf Raumtemperatur kommen und saugt ab. Es wird mit etwas tert-Butanol und dann mit Wasser gewaschen. Nach Trocknen erhält man 20,9 Teile eines Gemisches folgender Zusammensetzung:
5% der Formel Verbindung (XII)
65% der Formel Verbindung (VIIIc)
30% der Formel Verbindung (VIIId)

c) Wird das gemäß b) erhaltene Gemisch wie in Beispiel 1b) angegeben mit verschieden substituierten Anilinen umgesetzt, erhält man folgende erfindungsgemäße Verbindungen

| Beispiel¹⁾ | W¹ | W² | X | Y | R | λₘₐₓ in DMF [nm] |
|---|---|---|---|---|---|---|
| 10 (ne) | NO₂ | OH | Cl | H | m-Cl | 626 |
| 11 (ne) | NO₂ | OH | Cl | H | p-Br | 632 |
| 12 | NO₂ | OH | Cl | H | m-COOMe | 620 |

| | | | | | | |
|---|---|---|---|---|---|---|
| ¹⁾ ne = nicht erfindungsgemäß | | | | | | |

Die Angabe X = Cl und Y = H bedeutet, dass im Mittel etwa ein Chloratom an den Anthrachinonkern gebunden ist.

### Beispiele 13 bis 31

Analog zu den in vorstehenden Beispielen beschriebenen Verfahrensweisen können auch die nachfolgenden Verbindungen erhalten werden

| Beispiel ¹⁾ | W¹ | W² | X | Y | R(+R') | λₘₐₓ in DMF [nm] |
|---|---|---|---|---|---|---|
| 13 (ne) | OH | NO₂ | Cl | H | m-Cl | 624 |
| 14 (ne) | OH | NO₂ | Cl | H | m-Br | 626 |
| 15 | OH | NO₂ | Cl | H | m-COOMe | 625 |
| 16 | OH | NO₂ | Br | H | o-COOMe | 629 |
| 17 | OH | NO₂ | Br | H | m-COOEt | 627 |
| 18 | OH | NO₂ | Br | H | p-COOEt | 629 |
| 19 | OH | NO₂ | Br | H | m-COOMe | 628 |
| 20 (ne) | OH | NO₂ | Br | H | m-Cl | 621 |
| 21 (ne) | OH | NO₂ | Br | H | m-Br | 623 |
| 22 (ne) | OH | NO₂ | Br | H | p-Br | 627 |
| 23 | OH | NO₂ | Br | H | o-F | 610 |
| 24 | OH | NO₂ | Br | H | p-F | 612 |
| 25 | OH | NO₂ | Br | H | 3,4-di-F | 624 |
| 26 | OH | NO₂ | Br | H | 2,5-di-F | 616 |
| 27 | OH | NO₂ | Br | H | m-CF₃ | 620 |
| 28 (ne) | NO₂ | OH | Br | H | m-Cl | 623 |
| 29 (ne) | NO₂ | OH | Br | H | m-Br | 627 |
| 30 (ne) | NO₂ | OH | Br | H | p-Br | 630 |
| 31 | NO₂ | OH | Br | H | m-COOMe | 624 |

| | | | | | | |
|---|---|---|---|---|---|---|
| ¹⁾ ne = nicht erfindungsgemäß | | | | | | |

### Beispiel 32

30 g des gemäß Beispiel 1 erhaltenen Farbstoffs (in Form des wasserfeuchten Presskuchens) werden in 200 ml Wasser mit 63 g Natriumligninsulfonat und 3 g eines nichtionogenen Dispergiermittels (Additionsprodukt aus Abietinsäure und 50 Mol-Äquivalente Ethylenoxid) versetzt und mit 25%iger Schwefelsäure auf einen pH-Wert von 7 gestellt. Anschließend wird 1 h bei Raumtemperatur in der Perlmühle (90% < 1µm) gemahlen, gesiebt und im Sprühtrockner getrocknet.

2 g des so erhaltenen Pulvers werden in 1000 g Wasser dispergiert. Die Dispersion wird mit 0,5 bis 2 g pro I Flotte eines handelsüblichen Dispergiermittels auf Basis eines Kondensationsproduktes aus Naphthalinsulfonsäurenatriumsalz und Formaldehyd, 0,5 bis 2 g pro I Flotte Mononatriumphosphat und 2 g pro I Flotte eines handelsüblichen Egalisierhilfsmittels versetzt und mit Essigsäure auf einen pH-Wert von 4,5 bis 5,5 gestellt. In die so erhaltene Färbeflotte bringt man 100 g eines texturierten Polyestergewebes auf Basis Polyethylenglycolterephthalat ein und färbt 60 min bei 130°C. Nach reduktivem Nachreinigen erhält man eine blaue Färbung von ausgezeichneter Licht- und Heißlichtechtheit und sehr guter Sublimierechtheit.

Verfährt man so mit den Farbstoffen der Beispiele 2 bis 31, so erhält man ebenfalls blaue Färbungen von ausgezeichneter Heißlichtechtheit.

### Beispiel 33

0,093 g des Farbstoffs des Beispiels 15 werden in 10 ml DMF heiß gelöst, dazu gibt man 1 ml konz. Levegal^{®} DLP (Levegal ist eine eingetragene Marke der Firma Lanxess Deutschland GmbH) sowie 290 ml Wasser. Unter Rühren werden 0,2 g Dispers Gelb 71 (als 33,7%ige formierte Ware) und 0,13 g Dispers Rot 86 (als 34,9%ige formierte Ware) zugesetzt. Mit Essigsäure/Natriumacetat wird auf pH 4,5 gestellt und auf 1 I dieser Flotte bezogen wird 1 g Levegal DLP zugegeben.

Aus dieser Stammlösung entnimmt man ein Volumen, das 0,00465 g Farbstoffs des Beispiels 15 enthält, füllt mit Wasser auf 100 ml auf und gibt 5 g Polyester-Velours dazu. Es wird 45 min bei 135°C mit einer Aufheizrate von 1 grd/min gefärbt. Nach Abkühlen wird heiß und kalt gespült. Nach reduktivem Nachreinigen erhält man eine graue Färbung von ausgezeichneter Heißlichtechtheit.

Führt man diese Färbung unter Zusatz von 0,100 g eines UV-Absorbers auf der Basis von Phenyltriazinen oder Benztriazolen aus, so erhält man ebenfalls graue Färbungen von ausgezeichneter Heißlichtechtheit, wobei im Falle des Phenyltriazins die Heißlichtechtheit noch etwas höher als ohne Anwendung eines UV-Absorbers ist.

### Beispiel 34

0,082 g des Farbstoffs des Beispiels 15 werden in 10 ml DMF heiß gelöst, dazu gibt man 1 ml konz. Levegal DLP sowie 290 ml Wasser. Unter Rühren werden 0,27 g Solvent Yellow 163 (als 30,7%ige formierte Ware) und 0,041 g eines Farbstoffs der Formel (IV) mit R⁷ = Phenyl und R⁸ = Hydroxyethoxyethyl in Form des Isomerengemischs mit vertauschtem R⁷ und R⁸ (als 23,4%ige formierte Ware) zugesetzt. Mit Essigsäure/Natriumacetat wird auf pH 4,5 gestellt und auf 1 I dieser Flotte bezogen wird 1 g Levegal DLP zugegeben.

Aus dieser Stammlösung entnimmt man ein Volumen, das 0,0041 g des Farbstoffs des Beispiels 15 enthält, füllt mit Wasser auf 100 ml auf und gibt 5 g Polyester-Velours dazu. Es wird 45 min bei 135°C mit einer Aufheizrate von 1grd/min gefärbt. Nach Abkühlen wird heiß und kalt gespült. Nach reduktivem Nachreinigen erhält man ebenfalls eine graue Färbung von ausgezeichneter Heißlichtechtheit.

Führt man diese Färbung unter Zusatz von 0,150 g eines UV-Absorbers auf der Basis von Phenyltriazinen oder von 0,100 g eines UV-Absorbers auf Basis von Benztriazolen aus, so erhält man ebenfalls graue Färbungen von ausgezeichneter Heißlichtechtheit, wobei im Falle des Phenyltriazins die Heißlichtechtheit noch etwas höher als ohne Anwendung eines UV-Absorbers ist.

### Beispiel 35 (nicht erfindungsgemäß)

Ein textiles Flächengebilde, bestehend aus Polyester wird mit einer Flotte bestehend aus 50g/l einer 8%igen Natriumalginatlösung, 100 g/l einer 8-12%igen Kernmehletherlösung und 5g/l Mononatriumphosphat in Wasser foulardiert und dann getrocknet. Die Flottenaufnahme beträgt 70%.

Auf das so vorbehandelte Textil wird eine nach oben beschriebener Vorgehensweise hergestellte wässrige Tinte, enthaltend
3,5% des Farbstoffes gemäß Beispiel 1,
2,5% Dispergiermittel Disperbyk 190,
30% 1,5-Pentandiol,
5% Diethylenglykolmonomethylether,
0,01 % Biozid Mergal K9N und
58,99% Wasser
mit einem Drop-on-Demand (Piezo) Inkjet Druckkopf aufgedruckt. Der Druck wird vollständig getrocknet. Die Fixierung erfolgt mittels überhitzten Dampfes bei 175 °C während 7 Minuten. Anschließend wird der Druck einer alkalisch reduktiven Nachbehandlung unterzogen, warm gespült und dann getrocknet.

## Patentansprüche

1. Farbstoff der allgemeinen Formel I 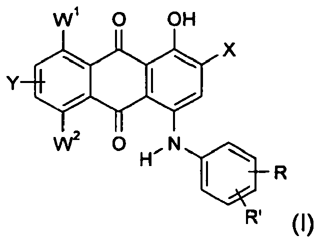 worin
X und Y für Wasserstoff, Brom oder Chlor, aber nicht gleichzeitig für Wasserstoff;
R für F, COOR¹ oder CF₃;
R' für H oder F;
R¹ für C₁-C₆-Alkyl; stehen und
einer der Reste W¹ und W² Hydroxy und der andere Nitro bedeuten und Y immer ortho zur Hydroxygruppe steht.

2. Farbstoff gemäß Anspruch 1, **dadurch gekennzeichnet, dass** R für F steht.

3. Farbstoffmischung, die mindestens einen Farbstoff der allgemeinen Formel I gemäß Anspruch 1 und mindestens einen weiteren Farbstoff, der zum Färben von Polyestertextilmaterialien für Automobilbezugsstoffe verwendet werden kann, enthält.

4. Farbstoffmischung gemäß Anspruch 3, **dadurch gekennzeichnet, dass** sie als weiteren Farbstoff einen gelben bzw. orangefarbene Farbstoffe aus der Reihe der Farbstoffe C.I. Dispers Gelb 23, 42, 51, 59, 65, 71, 86, 108, 122, 163, 182 und 211, C.I. Solvent Yellow 163, C.I. Dispers Orange 29, 30, 32, 41, 44, 45, 61 und 73, C.I. Pigment Orange 70, C.I. Solvent Braun 53, des Farbstoffs der Formel II 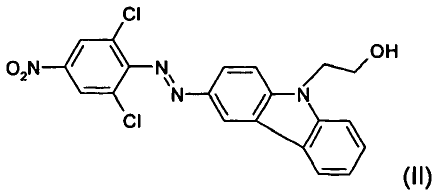 und des Farbstoffs der allgemeinen Formel (III) 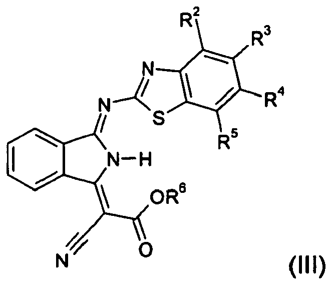 worin
R² bis R⁵ unabhängig voneinander für Wasserstoff, Chlor, Methyl, Ethyl, iso-Propyl, tert.-Butyl, Cyclohexyl, Methoxy, Ethoxy, n-Propoxy, n-Butoxy, Methoxy-ethyl, Ethoxyethyl, Butoxy-ethyl oder Phenoxy; und
R⁶ für Methyl, Ethyl, Propyl, iso-Propyl, Allyl, n-Butyl, iso-Butyl, n- und iso-Pentyl, Hexyl, Octyl, 2-Ethyl-hexyl, Methoxy-ethyl, Ethoxy-ethyl, Butoxy-ethyl oder Butoxy-ethoxy-ethyl;
stehen,
enthält.

5. Farbstoffmischung gemäß Anspruch 3, **dadurch gekennzeichnet, dass** sie als weiteren Farbstoff einen roten Farbstoff aus der Reihe der Farbstoffe C.I. Dispers Rot 60, 82, 86, 91, 92, 127, 134, 138, 159, 167, 191, 202, 258, 279, 284, 302 und 323, C.I. Solvent Red 176 und der Farbstoffe der allgemeinen Formeln IV, V und VI 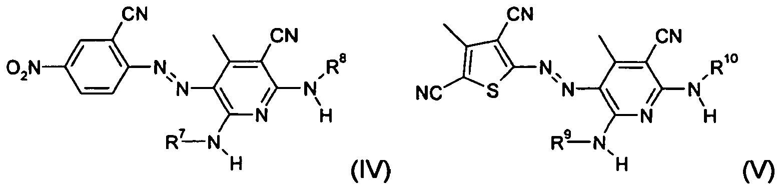 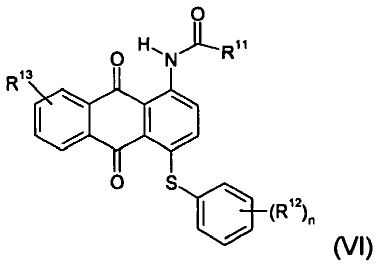 worin
R⁷ und R⁸ unabhängig voneinander für Hydroxyethoxyethyl oder Phenyl;
R⁹ und R¹⁰ unabhängig voneinander für Wasserstoff, Hydroxyethoxyethyl, Hydroxybutoxypropyl, Acetoxyethoxyethyl oder Acetoxybutoxypropyl;
R¹¹ für (C₁-C₈)-Alkyl, Phenyl oder Phenyl, das durch (C₁-C₄)-Alkyl, Hydroxy oder Halogen substituiert ist;
R¹² und R¹³ unabhängig voneinander für Wasserstoff oder Halogen; und
n für 0, 1 oder 2;
stehen,
enthält.

6. Farbstoffmischung gemäß Anspruch 3, **dadurch gekennzeichnet, dass** sie als weiteren Farbstoff einen blauen bzw. violetten Farbstoff aus der Reihe der Farbstoffe C.I. Dispers Blau 27, 54, 56, 60, 73, 77, 79, 79:1, 87, 266, 333 und 361, C.I. Dispers Violett 27, 28, 57 und 95 und der Farbstoffe der Formel VII 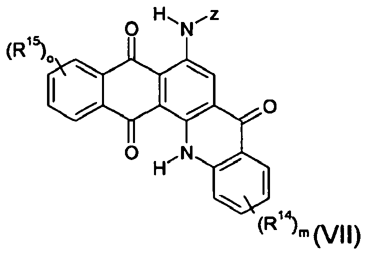 worin
R¹⁴ und R¹⁵ unabhängig voneinander für (C₁-C₈)-Alkyl, Halogen oder Hydroxy;
Z für -CO(CH₂)₃Cl, gegebenenfalls durch (C₁-C₈)-Alkyl, Halogen oder Hydroxy substituiertes -COPhenyl oder -SO₂R¹⁶;
R¹⁶ für (C₁-C₈)-Alkyl, Phenyl oder Phenyl, das durch (C₁-C₄)-Alkyl, Hydroxy oder Halogen substituiert ist; und
m und o unabhängig voneinander für 0, 1 oder 2;
stehen,
enthält.

7. Verfahren zur Herstellung eines Farbstoffes der allgemeinen Formel (I) gemäß Anspruch 1, **dadurch gekennzeichnet, dass** eine Verbindung der allgemeinen Formel (VIII) 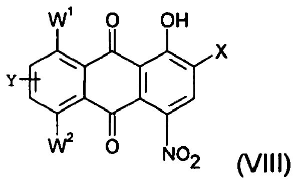 worin X, Y, W¹ und W² wie oben angegeben definiert sind, mit einer Verbindung der allgemeinen Formel (IX) 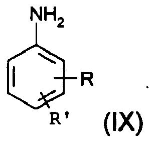 worin R wie oben angegeben definiert ist, umgesetzt wird.

8. Verwendung eines Farbstoffes der allgemeinen Formel I gemäß einem der Ansprüche 1 bis 2 oder einer Farbstoffmischung gemäß einem der Ansprüche 3 bis 6 zum Färben und Bedrucken von hydrophoben Materialien.

9. Verwendung gemäß Anspruch 8, **dadurch gekennzeichnet, dass** Polyesterfasern und Polyestertextilmaterialien für Automobilbezugsstoffe gefärbt oder bedruckt werden.

10. Verwendung gemäß Anspruch 9, **dadurch gekennzeichnet, dass** in Gegenwart von UV-Absorbern gefärbt oder bedruckt wird.

11. Tinte für den digitalen Textildruck nach dem Ink-Jet Verfahren, **dadurch gekennzeichnet, dass** sie einen Farbstoff der allgemeinen Formel (I) gemäß einem der Ansprüche 1 bis 2 oder eine Farbstoffmischung gemäß einem der Ansprüche 3 bis 6 enthält.

## Claims

1. A dye of the general formula I 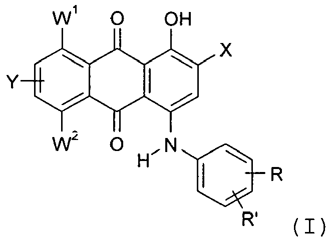 where
X and Y represent hydrogen, bromine or chlorine, but not simultaneously hydrogen;
R represents F, COOR¹ or CF₃;
R' represents H or F;
R¹ represents C₁-C₆-alkyl; and
one of W¹ and W² represents hydroxyl and the other nitro and Y is always ortho to the hydroxyl group.

2. A dye as claimed in claim 1, wherein R represents F.

3. A dye mixture comprising at least one dye of the general formula I as defined in claim 1 and at least one further dye useful for dyeing polyester textile materials for automotive fabrics.

4. A dye mixture as claimed in claim 3, comprising as further dye a yellow or orange dye selected from the group consisting of the dyes C.I. Disperse Yellow 23, 42, 51, 59, 65, 71, 86, 108, 122, 163, 182 and 211, C.I. Solvent Yellow 163, C.I. Disperse Orange 29, 30, 32, 41, 44, 45, 61 and 73, C.I. Pigment Orange 70, C.I. Solvent Brown 53, the dye of the formula II 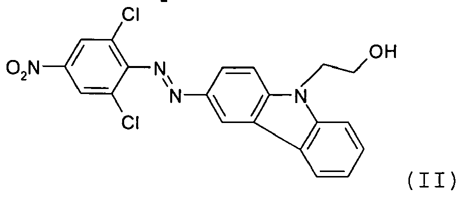 and the dye of the general formula (III) 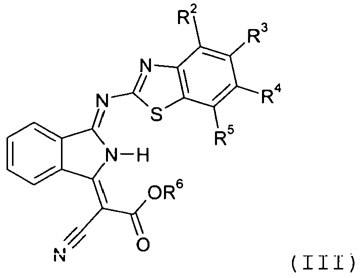 where
R² to R⁵ independently represent hydrogen, chlorine, methyl, ethyl, isopropyl, tert-butyl, cyclohexyl, methoxy, ethoxy, n-propoxy, n-butoxy, methoxyethyl, ethoxyethyl, butoxyethyl or phenoxy; and
R⁶ represents methyl, ethyl, propyl, isopropyl, allyl, n-butyl, isobutyl, n-pentyl, isopentyl, hexyl, octyl, 2-ethylhexyl, methoxyethyl, ethoxyethyl, butoxyethyl or butoxyethoxyethyl.

5. A dye mixture as claimed in claim 3, comprising as further dye a red dye selected from the group consisting of the dyes C.I. Disperse Red 60, 82, 86, 91, 92, 127, 134, 138, 159, 167, 191, 202, 258, 279, 284, 302 and 323, C.I. Solvent Red 176 and the dyes of the general formulae IV, V and VI 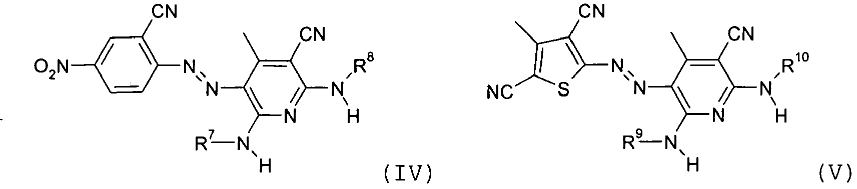 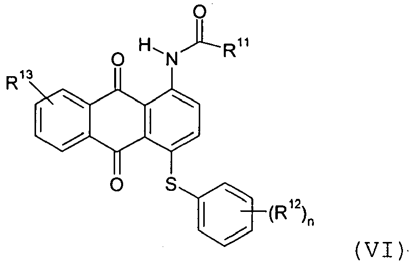 where
R⁷ and R⁸ independently represent hydroxyethoxyethyl or phenyl;
R⁹ and R¹⁰ independently represent hydrogen, hydroxyethoxyethyl, hydroxybutoxypropyl, acetoxyethoxyethyl or acetoxybutoxypropyl;
R¹¹ represents (C₁-C₈)-alkyl, phenyl or phenyl substituted by (C₁-C₄)-alkyl, hydroxy or halogen;
R¹² and R¹³ independently represent hydrogen, or halogen; and
n represents 0, 1 or 2.

6. A dye mixture as claimed in claim 3, comprising as further dye a blue or violet dye selected from the group consisting of the dyes C.I. Disperse Blue 27, 54, 56, 60, 73, 77, 79, 79:1, 87, 266, 333 and 361, C.I. Disperse Violet 27, 28, 57 and 95 and the dyes of the formula VII 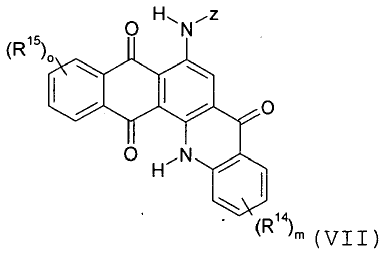 where
R¹⁴ and R¹⁵ independently represent (C₁-C₈)-alkyl, halogen or hydroxyl;
Z represents -CO(CH₂)₃Cl, optionally (C₁-C₈)-alkyl-, halogen- or hydroxyl-substituted -COphenyl or - SO₂R¹⁶;
R¹⁶ represents (C₁-C₈)-alkyl, phenyl or phenyl substituted by (C₁-C₄)-alkyl, hydroxyl or halogen; and
m and o independently represents 0, 1 or 2.

7. A process for preparing a dye of the general formula (I) as defined in claim 1, which comprises reacting a compound of the general formula (VIII) 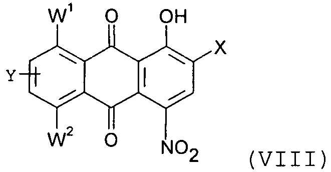 where X, Y, W¹ and W² are each as defined above, with a compound of the general formula (IX) 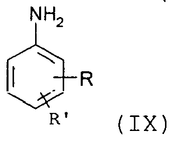 where R is as defined above.

8. The use of a dye of the general formula I as defined in either of claims 1 and 2 or of a dye mixture as claimed in any one of claims 3 to 6 for dyeing and printing hydrophobic materials.

9. The use as claimed in claim 8 wherein polyester fibers and polyester textile materials for automotive fabrics are dyed or printed.

10. The use as claimed in claim 9 wherein dyeing or printing is effected in the presence of UV absorbers.

11. A liquid ink for digital textile printing by the ink jet process, comprising a dye of the general formula (I) as defined in either of claims 1 and 2 or a dye mixture as claimed in any one of claims 3 to 6.

## Revendications

1. Colorant de formule générale I 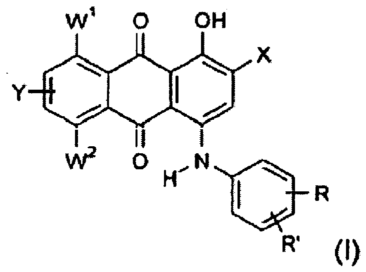 dans laquelle
X et Y représentent un atome d'hydrogène, de brome ou de chlore, mais non simultanément des atomes d'hydrogène ;
R représente F, COOR¹ ou CF₃ ;
R' représente H ou F ;
R¹ représente un groupe alkyle en C₁-C₆ ; et
l'un des radicaux W¹ et W² représente le groupe hydroxy et l'autre le groupe nitro et Y est toujours en position ortho par rapport au groupe hydroxy.

2. Colorant selon la revendication 1, **caractérisé en ce que** R représente F.

3. Mélange de colorants, qui contient au moins un colorant de formule générale I selon la revendication 1 et au moins un autre colorant qui peut être utilisé pour la teinture de matériaux textiles en polyester pour tissus de recouvrement pour automobiles.

4. Mélange de colorants selon la revendication 3, **caractérisé en ce qu'**il contient comme autre colorant un colorant jaune ou des colorants orangés de la série des colorants C.I. Disperse Yellow 23, 42, 51, 59, 65, 71, 86, 108, 122, 163, 182 et 211, C.I. Solvent Yellow 163, C.I. Disperse Orange 29, 30, 32, 41, 44, 45, 61 et 73, C.I. Pigment Orange 70, C.I. Solvent Brown 53, du colorant de formule II 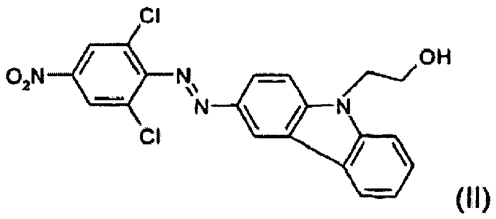 et du colorant de formule générale (III) 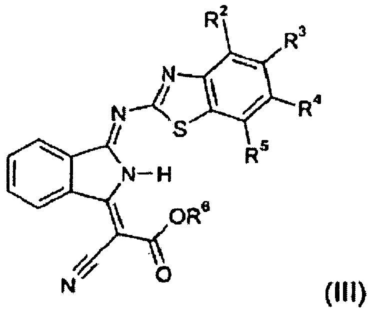 dans laquelle
R² à R⁵ représentent, indépendamment les uns des autres, un atome d'hydrogène ou de chlore, le groupe méthyle, éthyle, isopropyle, tert-butyle, cyclohexyle, méthoxy, éthoxy, n-propoxy, n-butoxy, méthoxy-éthyle, éthoxy-éthyle, butoxy-éthyle ou phénoxy ; et
R⁶ représente le groupe méthyle, éthyle, propyle, isopropyle, allyle, n-butyle, isobutyle, n- ou isopentyle, hexyle, octyle, 2-éthyl-hexyle, méthoxy-éthyle, éthoxy-éthyle, butoxy-éthyle ou butoxy-éthoxy-éthyle.

5. Mélange de colorants selon la revendication 3, **caractérisé en ce qu'**il contient comme autre colorant un colorant rouge de la série des colorants C.I. Disperse Red 60, 82, 86, 91, 92, 127, 134, 138, 159, 167, 191, 202, 258, 279, 284, 302 et 323, C.I. Solvent Red 176 et des colorants de formules générales IV, V et VI 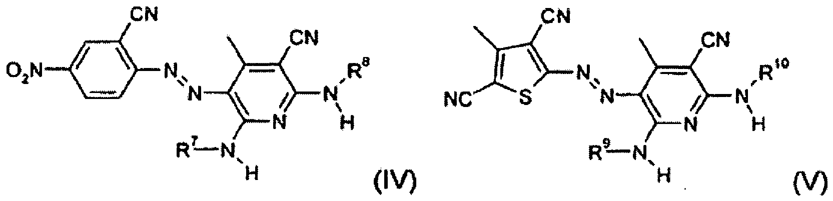 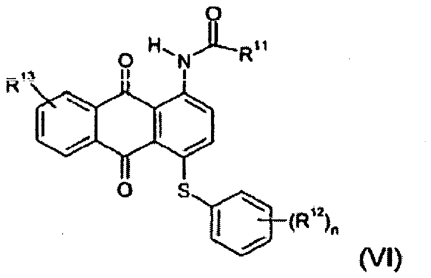 dans lesquelles
R⁷ et R⁸ représentent, indépendamment les uns des autres, le groupe hydroxyéthoxyéthyle ou phényle ;
R⁹ et R¹⁰ représentent, indépendamment l'un de l'autre, un atome d'hydrogène, le groupe hydroxyéthoxyéthyle, hydroxybutoxypropyle, acétoxyéthoxyéthyle ou acétoxybutoxypropyle ;
R¹¹ représente un groupe alkyle en C₁-C₈, phényle ou phényle qui est substitué par alkyle en C₁-C₄, hydroxy ou halogène ;
R¹² et R¹³ représentent, indépendamment l'un de l'autre, un atome d'hydrogène ou d'halogène ; et
n représente 0, 1 ou 2.

6. Mélange de colorants selon la revendication 3, **caractérisé en ce qu'**il contient comme autre colorant un colorant bleu ou violet de la série des colorants C.I. Disperse Blue 27, 54, 56, 60, 73, 77, 79, 79:1, 87, 266, 333 et 361, C.I. Disperse Violet 27, 28, 57 et 95 et des colorants de formule VII 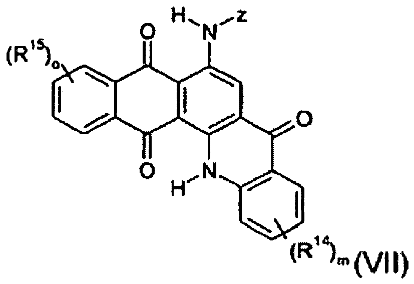 dans laquelle
R¹⁴ et R¹⁵ représentent, indépendamment l'un de l'autre, un atome d'halogène ou un groupe alkyle en C₁-C₈ ou hydroxy ;
Z représente -CO(CH₂)₃Cl, un groupe -COphényle éventuellement substitué par alkyle en C₁-C₈, halogène ou hydroxy, ou -SO₂R¹⁶ ;
R¹⁶ représente un groupe alkyle en C₁-C₈, phényle ou un groupe phényle qui est substitué par alkyle en C₁-C₄, hydroxy ou halogène ; et
m et o représentent indépendamment l'un de l'autre 0, 1 ou 2.

7. Procédé pour la préparation d'un colorant de formule générale (I) selon la revendication 1, **caractérisé en ce qu'**on fait réagir un composé de formule générale (VIII) 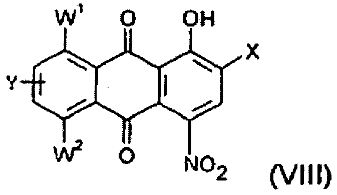 dans laquelle X, Y, W¹ et W² sont définis comme indiqué plus haut, avec un composé de formule générale (IX) 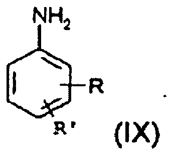 dans laquelle R est défini comme indiqué plus haut.

8. Utilisation d'un colorant de formule générale I selon l'une quelconque des revendications 1 et 2 ou d'un mélange de colorants selon l'une quelconque des revendications 3 à 6, pour la teinture et l'impression de matériaux hydrophobes.

9. Utilisation selon la revendication 8, **caractérisée en ce qu'**on teint ou imprime des fibres de polyester et des matériaux textiles en polyester pour tissus de recouvrement pour automobiles.

10. Utilisation selon la revendication 9, **caractérisée en ce qu'**on effectue la teinture ou l'impression en présence d'absorbeurs UV.

11. Encre pour impression numérique de textiles selon le procédé d'impression par jet d'encre, **caractérisée en ce qu'**elle contient un colorant de formule générale (I) selon l'une quelconque des revendications 1 et 2 ou un mélange de colorants selon l'une quelconque des revendications 3 à 6.
